# EUROPEAN PATENT APPLICATION

(11) **EP 3 738 438 A1**
(43) Date of publication of application: **18.11.2020**
(21) Application number: 19000338.4
(22) Date of filing: 18.07.2019
(51) Int. Cl.: A23C 1/00, A23C 9/00

(54) **A METHOD FOR PRODUCING MILK AND DAIRY SUPPLEMENTS WITH A UNIQUE FATTY ACID COMPOSITION BY RESTORING THE COMMENSAL NATURAL MICROBIOTA**

(30) Priority: 15.05.2019 SK 502019
(71) Applicant: Labas, Miroslav, 040 01 Kosice (SK)
(72) Inventor: Labas, Miroslav, 040 01 Kosice (SK)
(74) Representative: Vasil, Martin

(57) **Abstract**

A Method for Producing Milk and Dairy Supplements with a Unique Fatty Acid Composition, by Restoring the Commensal Natural Microbiota allows to obtain unique composition of fatty acids by its identification and separation from cow's, sheep's or goat's milk of specific geographic region and it also allows to obtain the natural, commensal microbiota, which would cease to exist due to pasteurization in the normal process of milk production and treatment, wherein the natural microflora is added to the drinking milk or stored in an instant form for addition to the milk or for the preparation of a dairy beverage containing the natural microflora typical for the region of milk's origin, while for region of Eastern and Central Slovakia there are identified and separated these beneficial microbes *Enterococcus faecalis SP, Enterococcus faecalis Ccj, Enterococcus hirae Klk, Lactobacillus plantarum SP, Lactobacillus plantarum AN, Lactobacillus paracasei TD, Lactobacillus catenaformis SB and Kluyveromyces marxianus SB* and most suitable ratio of fatty acids is ω-3 α-Linolenic acid (C18:3n3) 0,81%, ω-6 linoleic acid (C18:2n6c) 2,15%, arachidic acid (20:0) 0,22% and behenic acid (22:0) 0,11 %.

## Description

### Field of the Invention

The invention generally relates to the food industry, namely to the production of drinking milk, or dairy supplements and drinks.

The invention gives rise to three complex innovative approaches that relate to different fields of technology:
(1) Controlled care for the animals based on the wild pasture feed in the mountainous regions of the Eastern and Central Slovakia, with a balanced food composition: local grass feed, free of preservatives, from farms complying with organic farming principles;
2) A new process for the production of new dairy products with ethnic preparation, or the preparation of the functional new-generation dairy products, with a defined, fixed ratio of ethnic commensal microbial flora, typical for the area of origin, in a combination with the original unique fatty acid profile and a chemical composition of milk from farms that respect the organic farming principles;
3) Evidence of beneficial health effects - intestinal microflora, and modulation of metabolites (short chain fatty acids) and SIgA (secretory immunoglobulin A) to prevent inflammation (of low grade), which is a major trigger of non-communicable diseases.

### Background

Nowadays, drinking milk is mainly produced from cow's milk, which is referred to as "drinking milk".
Drinking milk is a source of biologically active nutrients that are necessary for a healthy development of humans, which contain:
- Nutritional and building materials for the body building and human growth in children age;
- Substances ensuring energy supply for the organism;
- Minerals, vitamins, hormones, and enzymes;
- Essential elements that the body cannot synthesize.

Drinking milk contains milk fat, milk sugar-lactose, milk proteins and minerals, of which calcium is the most important. A prevailing portion of drinking milk is produced by the dairy treatment of raw cow's milk, which is a set of technological processes, such as clarification, centrifugation, heat treatment (pasteurization), homogenization, cooling, and packaging. Depending on what technological processes and methods are used in the drinking milk production, different market types are distinguished.

Dairy cows alone produce milk without microorganisms through the alveoli in the mammary gland. Milk becomes contaminated already in the udder (primary contamination), so some non-pathogenic microflora can be considered physiological.
The most important group of these microorganisms in milk is the mesophilic lactic fermentation bacteria represented by coccoid and rod-shaped forms. These are divided into homofermentative (they ferment lactose to lactic acid) and heterofermentative (except lactic acid, they ferment lactose to other components, such as butyric acid and ethanol). Particularly useful is the Streptococcus genus with the S. Iactis homoenzyme bacterium, and the Leuconostoc genus with the L.cremoris and L. dextranicum heteroenzymic bacteria. The rod-shaped forms of lactic fermentation bacteria combine into the Lactobacillus genus. From among the homoenzyme bacteria, L. lactis, L. bulgaricus, L acidophilus, L. helveticus, L. casei and L. delbrueckii, and among the heteroenzymic bacteria, L. fermentum and L. brevis, are of importance.
Secondary contamination of milk caused during milking and milk treatment, and the storage of inadequately cooled milk, represents the largest proportion of microorganisms in milk. It is estimated that contamination is ten times-higher during milking than physiological infection in the udder; milk treatment causes another multiple infection. Milk contamination, which comes from common dirt in stables, is serious. The activity of these microorganisms is manifested not only in health defects, but also in the technological processing of milk. The undesirable microflora of milk is formed by the often present enterobacteria of the Escherichia and Enterobacter genera (Escherichia coli, Enterobacter aerogenes), followed by the butyric fermentation bacteria (such as Clostridium butyricum), proteolytic bacteria (Bacillus subtilis, B mycoides). Various yeasts and yeast microorganisms (e.g. Saccharomyces, Candida) and other microorganisms may be present, too. In today's modern refrigeration technology, the most important of these groups in the process of extracting and processing milk includes the psychrophilic microorganisms, which can be propagated even at low milk storage temperatures, i.e. at about 5 °C. Although they can be easily destroyed by pasteurization, they produce lipase and protease enzymes, which can cause dairy taste defects, fissure milk components, and which retain their activity even after pasteurization. The most important genera of psychrophilic microorganisms include, for example Pseudomonas, Alcaligenes, Flavobacterium, Lactobacillus, Steptococcus Staphylococcus, Micrococcus and others.

Immediately after milking, milk contains several hundred to many thousands of microorganisms per a millilitre, of which 90% is of external origin. In particular, bacteria, less yeasts and filamentous fungi, are represented, but pathogenic microbes are often present too, due to which milk pasteurization has been introduced.
Milk is a perfect and most natural drink. It contains the most valuable animal proteins, easily digestible fat, and a variety of important minerals. It contains essential amino acids, vitamins, milk sugar, and many trace elements essential for the nutrition and development of the human body that ensure the normal function of metabolism and the protection of human health. The versatility of milk in nutrition is also evidenced by the proportion of the total daily consumption of life-needed substances, which an adult can obtain from one liter of milk. It is 40% of proteins, 32%, of fat, 12% of sugars and, in particular, up to 20% of calcium, 67% of phosphorus, 30% of vitamin A, 25% of vitamin B1, and up to 70% of vitamin B2.
Because of the modern and over-chemicalized, long-life food of people, the justification for the consumption of milk enriched with the original commensal microflora, which helps establishing a microbial balance in the gastrointestinal tract while strengthening the immunity of the population, is growing.

From the prior art point of view, it is essential that drinking milk is currently produced by performing the following technological procedures successively:
1) Clarification;
2) Centrifugation;
3) Heat treatment (pasteurization);
4) Homogenization;
5) Cooling and packaging.

The innovativeness of our invention lies in the introduction of new steps (technological processes) to the drinking milk production process as highlighted below:
1) Clarification;
2) Centrifugation;
**3) Isolation of selected microorganisms;**
4) Heat treatment (pasteurization);
**5) Enrichment of milk, i.e. the return of microorganisms isolated in point 3, back to pasteurized milk;**
6) Homogenization;
7) Cooling and packaging.

The above points 3) and 5) are the subject matter of the invention as described below.

In addition to the production of drinking cow's milk, the prior art does not know any other dairy powdered drinks, or any other dairy supplements, that would contain separate health-beneficial bacteria in a powder form.

All current dairy powdered drinks are derived from post-pasteurization milk, thus not containing all of the original beneficial bacteria found in the milk. The innovativeness of our invention lies in the separation of the natural, health-beneficial bacteria from milk prior to its pasteurization, thereby protecting these bacteria from damage by pasteurization, and subsequently keeping them in powder for various applications in the food industry, or returning them to milk and producing milk enriched with these health-beneficial bacteria, then sold and consumed.

A second innovative feature of the present invention is in the identification of the beneficial microorganisms and fatty acids in milk obtained from organic farming from a particular region. Specifically, we have dealt with mountainous regions of the Eastern and Central Slovakia, but this process of milk production can be carried out similarly in any other region of the world.

By identifying and separating healthy-beneficial microorganisms, we can then reproduce them artificially, and return to milk after pasteurization. At the same time, we can get information about the correct and appropriate ratio of these microorganisms in milk, which would be suitable for the population of a particular area. By identifying the health-beneficial fatty acids, we can get information about the correct and appropriate ratio of these fatty acids in milk that is suitable for the population of a particular area.

As mentioned below, this information is valuable in the process of producing milk and dairy drinks, as it makes it possible to produce more suitable food for humans. At present, this trend is manifested in the production and promotion of various types of functional foods.

Functional foods are commonly known as products that have favorable effects on the consumers of these foods.
In most cases, they are currently produced by adding prebiotic and probiotic compounds to the natural organic products.
A functional food is a food that gains another function by adding new ingredients or more of those existing ingredients. Growing demand for the functional, enriched foods and increasing consumer awareness of health and fitness is expected to increase demand for functional foods. There is a growing demand for functional foods; the increasing consumer awareness of health and fitness, a growing population of children, changing lifestyles patterns, and expanding urbanization further increase the market growth. (Reference 1)
**Functional foods** have not yet been defined in **European** legislation. They are generally considered to be **foods** that are consumed as part of the normal diet, and which contain biologically active ingredients with a potential to improve health or reduce the risk of disease (Reference 2).

There is no recipe for the perfect food. However, from the available knowledge we can conclude that, in addition to new nutritional, technological, sensory, and health properties, the preparation of the new types of food should ensure the availability of nutrients to the consumer and its microbes. Determining the composition and a processing technology that adapts the bioavailability of nutrients to the specific needs of each individual, and especially our strong symbionts, will be the starting point for entering a new era of personalized nutrition (Reference 3).

### References 1-3

### Reference 1

https://www.quora.com/What-are-the-next-generation-functional-foods

### Reference 2

https://ec.europa.eu/jrc/en/publication/eur-scientific-and-technical-research-reports/functional-food-european-union
Serafini M, Stanzione A, Foddai S. Functional foods: traditional use and European legislation. Int J Food Sci Nutr. 2012 Mar; 63 Suppl 1: 7-9. doi: 10.3109/09637486.2011.637488. Epub 2011 Nov 28

### Reference 3

Ercolini D., Fogliano V. Food Design To Feed The Human Gut Microbiota. J Agric Food Chem. 2018 Apr 18; 66(15):3754-3758. doi: 10.1021/acs.jafc.8b00456. Epub 2018 Apr 5.

Currently, milk and dairy products are known as the new potentially functional foods based on the already published information about (References 4-7):

### Antioxidant properties

Reference 4: Khan IT, Nadeem M, Imran M, Ullah R, Ajmal M, Jaspal MH. Antioxidant properties of Milk and dairy products: a comprehensive review of current knowledge. Lipids Health Dis. 2019; 18(1):41. Published 2019 Feb 4. doi: 10.1186/s12944- 019-0969-8

### Potential ability to modulate host [rat] intestinal microbiome

Reference 5: Rettedal EA, Altermann E, Roy NC and Dalziel JE (2019) The Effects of Unfermented and Fermented Cow and Sheep Milk on the Gut Microbiota, Front. Microbiol. 10:458. doi: 10.3389/fmicb.2019.00458

### Partially investigated effect on human immunity functionality

Reference 6: Perdijk O, van Splunter M, Savelkoul HFJ, Brugman S, van Neerven RJJ. Cow's Milk and Immune Function in the Respiratory Tract: Potential Mechanisms. Front Immunol. 2018;9:143. Published 2018 Feb 12. doi: 10.3389/fimmu.2018.00143

### Fatty acid content as an energy indicator

Reference 7: Arch. Anim. Breed., 60, 205-212, 2017 https://doi.org/10.5194/aab-60-205-2017, Milk fatty acid composition as an indicator of energy status in Holstein dairy cows; Lana Vrankovic', Jasna Aladrovic, Daria Octenjak, Dusanka Bijelic, Luka Cvetnic', and Zvonko Stojevic

It is also known that the composition of fatty acids is the result of the animal feed and the good life conditions of animals. Reference 8:
http://www.megalac.com/about/news/154-fatty-acids-in-feeding-programmes-for-dairy-cows

Previous studies, as part of the observational, prospective, and meta-analysis studies, have speculated that the composition of fats and plasma fatty acids in foods contributes to the development of insulin resistance and metabolic syndrome.

### Reference 9:

Lee YS, Cho Y; Shin MJ. Dietary Very Long Chain Saturated Fatty Acids and Metabolic Factors: Findings from the Korea National Health and Nutrition Examination Survey 2013. Clin Nutr Res. 2015;4(3):182-189. doi: 10.7762/cnr.2015.4.3.182*.*

### Summary of invention

We propose the new functional dairy products that are characterized by a specific combination of the detected and identified fatty acids, along with the specific ratio of natural commensal microorganisms typical of the region of milk origin. The combination of fatty acids and commensal microorganisms thus determined interacts like
- natural preservatives of the long-life fresh milk. At the same time, they create nutrient conditions for the downstream dairy products and, along with a storage process after a modified pasteurization process (with a reduced temperature of 56 °C) and the addition of commensal microbes that grow in milk in synergy - **Result No. 1**, they create a new dairy product production process, which consists in adding a new step to the milk production process (step No. 3 - isolation of the selected microorganisms), which must be carried out before step No. 4), i.e. prior to heat treatment of milk (pasteurization). Subsequently, a new step No. 5), milk enrichment, is added, i.e. return of the microorganisms isolated in step No. 3), back to the pasteurized milk. These steps are performed with commensal microorganisms, thereby providing **synergistic growth;**
- **Result No. 2:** Prevent the reproduction of other potentially pathogenic microbes and keep the milk fresh in the refrigerator for 10 days in a fresh live form, which is later transformed into sour milk/sour dairy products;
- **Result No. 3:** The beneficial effect of revitalized milk and dairy products on the intestinal microflora (increasing levels of Bacteroides (mainly B. fragilis and B. Thetaiotaomicron), Parabacteroides (P- distasonis), Collinsella, Desulfovibrio, Roseburia (R. inulinivorans, R, Intestinalis), Eubacterium (E. hallii);
- **Result No. 4**: Beneficial effect of revitalized milk and dairy products on the bowel metabolite profiles, i.e. modulation of the short chain fatty acids in a combination with the increased production of butyrate and propionates, and a reduction of acetate, as found in the experimental mice (BALB/c linear mice, i.e. a white mouse breeding line) in the intestines of experimental mice, resulting in the modulation of a healthy combination of intestinal microbes;
- **Result No. 5**: The new functional dairy products (the next generation functional foods) are characterized by a composition similar to the primitive and healthy composition of fatty acids - defined by a fixed unique ratio of ω-3 and ω-6 fatty acids, as well as the long chain fatty acids. Fatty acids, which are typical of our next generation, ethnically functional foods related to Eastern and Central Slovakia have the following fatty acid composition: ω-3 c-Linolenic acid (C18:3n3) of 0.81% a ω-6 Linoleic acid (C18:2n6c) of 2.15% (short chain fatty acids), and Arachidic acid (20:0) of 0.22%, and Behenic acid (22:0) of 0.11% (very long chain fatty acids), with a protective effect detected against a risk of metabolic syndrome.
- **Result No. 6**: Modulation of local mucosal immune response by increasing SIgA (secretory immunoglobin A) production in the intestinal content (up to 150 mg/g of faeces);
- **Result No. 7**: The composition of useful *Enterococcus hirae* and *Lactobacillus paracasei* strains identified by the above procedure and isolated from milk replaces the opportunistic enterococci related to obesity and cardiovascular disease.

In summary, the present application presents a process for the production of the new generation dairy products with a unique fatty acid composition and a microbial mixture of eight original dairy commensal bacteria with a positive effect on the intestinal microbes of consumers and the production of their metabolites (short chain fatty acids - butyrate, propionate, but not acetate), while stimulating SigA (secretory immunoglobulin A) production in the intestine. This provides a local immune response; these processes together allow the prevention of low grade inflammation leading to non-communicable diseases, such as cardiovascular disease, obesity, or type 2 diabetes.

We offer a new generation functional product based on the unique ratio of commensal bacteria and the selected fixed ingredients of milk fatty acids, which is capable of modulating the useful intestinal microbiome, and thus their metabolites and a local mucosal immune response.

Milk produced by the proposed method, with the naturally obtained long-chain fatty acid composition in a combination with the ratio of eight selected strains of commensal bacteria, is a new type of ethnically functional foods. Such a product has a proven ability to prevent non-communicable diseases by targeting the host intestinal microflora and its metabolites, and the anti-inflammatory local immune response (as demonstrated by laboratory mice).

The bacterial part of the dairy product has a beneficial effect on the intestinal microflora due to increasing levels (modulation) of Bacteroides (mainly B. fragilis and B. thetaiotaomicron), Parabacteroides (P. distasonis), Collinsella, Desulfovibrio, Roseburia (R. imulinivorans, R. Intestinalis), Eubacterium (E. hallii) bacteria, resulting in higher production of the short chain fatty acids, such as butyrate, propionate, but not acetate. Short-chain fatty acids modulate the host health directly through a range of tissue-specific mechanisms associated with the intestinal barrier function, glucose homeostasis, immunomodulation, appetite regulation, and obesity.
The greatest impact of the short chain fatty acids, as well as the effect of secretory immunoglobulin A on the health of the host metabolism, is evidenced by their importance in organizing the epithelial barrier to maintain intestinal integrity and prevent translocation of bacterial inflammatory molecules through the intestinal wall.
The following types of bacteria have been investigated and identified as commensal beneficial microorganisms from cow's milk from the mountain region of Eastern and Central Slovakia:

| **No.** | **Microorganism: Name** | **CFU/ml*** | **CFU/l**** |
|---|---|---|---|
| 1 | *Enterococcus faecalis SP* | 2x10⁵ | 2x10⁸ |
| 2 | *Enterococcus faecalis Ccj* | 3x10⁵ | 3x10⁸ |
| 3 | *Enterococcus hirae Klk* | 2x10⁵ | 2x10⁸ |
| 4 | *Lactobacillus plantarum SP* | 2x10³ | 2x10⁶ |
| 5 | *Lactobacillus plantarum AN* | 1x10² | 1x10⁵ |
| 6 | *Lactobacillus paracasei TD* | 1x10² | 1x10⁵ |
| 7 | *Lactobacillus catenaformis SB* | 4x10² | 4x10⁵ |
| 8 | *Kluyveromyces marxianus SB* | 7x10² | 7x10⁵ |

| | | | |
|---|---|---|---|
| * A colony-forming unit per milliliter of milk ** A colony-forming unit per liter of milk | | | |

In the event that such isolation of microorganisms would be formed in another region of the world, or by isolation from other types of milk (i.e. not from cow's, but from goat's or sheep's milk), other species of beneficial commensal microorganisms characteristic of the region, in which research and isolation would be carried out, could be isolated.

In addition, milk should be obtained from similar areas of breeding and feeding in mountain areas with a detected and fixed nutrient composition to ensure the appropriate chemical composition of the milk and a unique fatty acid profile.

Thus, ultimately, the content and specification of the isolated microorganisms obtained depend on the locality and region, in which the milk is obtained and subsequently processed by the process described in these annexes hereto.

The recovery of the bacteria in question takes place as follows.

Samples of milk or sour dairy products are taken locally from different milk producers *in situ* (locally, i.e. from farms). In our particular case, we collected samples from farms in the mountainous regions of the Eastern and Central Slovakia. However, the procedure below can be performed in any other area of the world.

Milk or sour dairy products are collected into the sterile containers with different volumes of 60 ml and 120 ml, and in amounts as determined for laboratory analyses of at least 3 liters from each farm to conduct one analysis.

The research of all farms (farmyards) is carried out with a triple repetition, and with a multiple sampling of milk or sour dairy products - at least three samples per each farm.

Native (undiluted) milk is added separately in an undiluted form to MRS (http://himedialabs.com/TD/M641.pdf) broth to collect useful microorganisms (10 ml of milk or tested sour dairy product (kefir) and 40 ml of MRS broth). MRS stands for "de Man, Rogosa and Sharpe medium."

**To isolate lactobacteria:** *Lactobacillus, Lactococcus,* samples as the serial dilutions in tubes (Eppendorf) from 10⁻¹ to 10⁻⁹ in saline solution were inoculated to MRS agar and broth. To isolate other useful microorganisms, the samples are inoculated to other different selective cultivating media (all cultivating media are made by HIMEDIA brand; http://www.himedialabs.com/intl/en/products/100000027/Microbiology).

**To isolate bifidobacteria** *(Bifidobacterium* genus strains) and subsequently store them, the semi-liquid Blaurock agar and bifid agar are used. http://www.bimedialab.com/TD/M1396.pdf

**To isolate enterococci,** *Enterococcus* and their subsequent culture, enterococcal agar and bile-esculin agar are used; http://himedialabs.com/TD/M1580.pdf;

**To ensure growth (isolation, cultivation, revaccination) of streptococcus,** the streptococcus agar is used; http://himedialabs.com/TD/M248.pdf;

**To detect other useful microorganisms and accompanying microbiota,** all samples taken are inoculated analogously to the cultivating media, such as Sabourauda agar, nutrient agar/broth, Staphylococcus agar, bismuth sulfite agar, Salmonella Shigella agar, Endo or MacConkey agar, Clostridium broth/agar, Yersinia agar, carbohydrate-based broth, and others.

All other uncultivated or extremely sensitive microorganisms were detected by sequencing the 16S rRNA gene.

Genome sequencing of all isolated commensal microorganisms was performed using Illumina sequencing kits, and the StrainSeeker program.

The inoculated samples are cultured at different temperature modes of 15 °C, 37 °C, and 45 °C.
After 24 hours, 100 µl of the enriched samples are inoculated on MRS agar and incubated under anaerobic conditions at 37 °C for 48 hours.

Furthermore, tests are carried out to isolate and identify dairy and other useful microorganisms, as well as all accompanying microorganisms. Specifically, conducted are:
Routine tests, such as Gram staining and biochemical tests: catalase, oxidase, indole production, and also the physiological ones, such as motion research, growth at different temperatures (15-37-45 °C), and saccharide ones, such as fermentation of sucrose, lactose, maltose, trehaloze, and galactose.
Thus, primary identification of lactobacteria is performed using the conventional microbiological tests, including Gram staining to detect morphology, catalase and oxidase assays, motility test, indole production, growth at 15 °C, and saccharide fermentation (arabinose, fructose, lactose, manitol, salicine, sucrose, and trehalose).

The definitive confirmed identification is carried out using the semi-automatic or automatic biochemical test systems (by Lachema).

In this process and research, we use the following tests:
1) ANAEROtest23; https://www.erbalachema.com/attachments/ANAEROtest23 CZ SK EN RU PL R.
2) CANDIDA-Screen; https://www.erbalachema.com/attachments/CANDIDA-Screen CZ SK EN PL RU E.pdf
3) EN-OCCUStest; https://www.erbalachema.com/attachments/EN-COCCUStest CZ SK EN RU PL P.pdf

After biochemical identification, the MALDI proteomic identification is performed.

The strains taken for making mixtures of useful microorganisms to be subsequently added to the meals in an instant form are sequenced. An accompanying document for culture is prepared for each of them. At the same time, their synergistic effect is investigated and confirmed.

A variety of *in vitro* assays and experiments are conducted to confirm non-pathogenicity, non-toxicity and non-toxigenicity, as well as the presence of useful properties.

Useful microorganisms include strains having the following proved characteristics:
1) They are non-pathogenic;
2) They are non-toxic;
3) They are non-toxigenic
4) They are capable of fermenting milk and aiding the production of useful metabolites, such as lactic acid, vitamins, etc.;
5) They are characterized by a spectrum of antibacterial and antagonistic properties against pathogenic and conditional pathogenic bacteria;
6) They are able to stimulate the body's immune response;
7) They are not resistant to most antibiotics.

Other microorganisms which, according to their taxonomy, as well as other characteristics, are classified as accompanying microbiota are analyzed solely for the purpose of hygienically assessing the quality of milk.

**In the light of the above, it is possible to briefly state the following steps needed to obtain a natural commensal microflora from milk:**
1) The withdrawal of milk from cows, goats, or sheep in accordance with hygiene requirements;
2) Inoculation of microorganisms into the respective selective cultivating media;
3) Examination of the qualitative and quantitative content of all micro-organisms;
4) Isolation of pure cultures exhaustively by seeding;
5) Examining their biological properties;
6) Determining their harmlessness;
7) Identification of strains isolated by applying a standard routine procedure;
8) Identification using the test systems and MALDI;
9) Sequencing;
10) Performing lyophilization.

In view of the detailed information regarding the retention (storage) of the bacteria obtained as referred to above:
1) The isolates are kept as own author's cultures in the premises of LABAŠ, s.r.o. in Košice, in the form of agar columns, on a semi-solid agar of 10 tubes per 1 strain; they are kept in a refrigerator at 4 °C;
2) The cultures are additionally frozen in the MRS protective cultivating medium with 15% glycerol, and stored at -80 °C;
3) Strains are freeze dried and stored in ampoules. Each of the identified bacterial species typical of the Eastern and Central Slovakia regions, i.e. *Enterococcus faecalis SP, Enterococcus faecalis Ccj, Enterococcus hirae Klk; Lactobacillus plantarum SP, Lactobacillus plantarum AN, Lactobacillus paracasei TD, Lactobacillus catenaformis SB, and Kluyveromyces marxianus SB,* has the Strain Passport and certificate of harmlessness issued.

The natural microflora obtained by the above method is added to fresh milk after pasteurization. If these microorganisms should be used in a powder form, then a procedure must be specified, by applying of which the bacteria (obtained by the above method) are to be stored instantly. To achieve the desired goal, the following needs to be done:
1) Prepare the pure (pre-inoculated to the culture medium appropriate for each bacterium and condition) liquid (broth) daily (18-24 hours) culture containing one out of eight strains of useful microorganism;
2) Grow from them, by a specific or common cultivation, several strains simultaneously (all lactobacteria together and all enterococci together, and *Kluyveromyces marxianus* separately) on the mats or in banks (fermenters), with a concentration of each strain at a minimum of 10⁹-10¹¹ CFU/ml;
3) Make the necessary amount of liquid mixtures of 1, 101 etc.;
pasteurization-caused damage; moreover, such milk or dairy products contain a specific fatty acid ratio that is most suitable for the populations of the milk-producing region.

The invention can also be used to obtain a human health-promoting commensal microflora, which is subsequently stored in a powder form. This is a dairy supplement. This powder can be offered as a separate product, e.g. by adding it to drinking milk depleted of these beneficial substances. Powder containing the original microorganisms would be added to the standard (even currently) available drinking milk immediately prior to consumption.

The invention can also be used to prepare a complex milk drink, whether a natural flavorless milk drink or a flavored milk drink (e.g. flavored with cocoa, vanilla, strawberry and the like). Thus, in this case, separate and reproduced healthy beneficial bacteria would be added to the dried milk, and the resulting instant drink could be prepared by adding water.

The invention can be applied not only to cow's milk, but also to goat's or sheep's milk under the same conditions and by the same procedure.

## Claims

1. A method for producing milk and dairy supplements with a unique fatty acid composition by restoring a commensal natural microbiota, **characterized by** the fact that it allows obtaining a natural commensal microflora by identifying and separating it from the cow's, goat's or sheep's milk from a particular geographical area, while such microbiota is the best suited to be consumed by the populations of a region of origin of that milk, but is regularly destroyed by pasteurization as part of the standard milk production and processing; therefore, the natural commensal microflora thus obtained contains the separate strains of commensal microbiota, which are subsequently industrially reproduced and added back to post-pasteurization drinking milk, or the microbiota is processed and bound to the base in an instant powder form.

2. A method for producing milk and milk supplements with a unique fatty acid composition by restoring a commensal natural microbiota, **characterized by** the fact that it allows obtaining the following natural commensal species of *Enterococcus faecalis SP, Enterococcus faecalis Ccj, Enterococcus hirae Klk, Lactobacillus plantarum SP, Lactobacillus plantarum AN, Lactobacillus paracasei TD, Lactobacillus catenaformis SB and Kluyveromyces marxianus SB* bacteria that are typical of cow's milk obtained in the mountainous regions of the Eastern and Central Slovakia, as identified and separated from cow's milk, and subsequently are industrially reproduced, processed and added back into the drinking milk, or these bacteria are subsequently industrially reproduced, processed and bound to the base in an instant powder form, which is most suitable for being consumed by the population of the region of Eastern and Central Slovakia.

3. A method for producing milk and dairy supplements with a unique fatty acid composition by restoring a commensal natural microbiota, **characterized by** the fact that it allows obtaining the following natural commensal species of bacteria *Enterococcus faecalis SP* with a quantity of 2.10⁵ CFU/ml, *Enterococcus faecalis Ccj* of 3x10⁵ CFU/ml, *Enterococcus hirae Klk* of 2x10⁵ CFU/ml, *Lactobacillus plantarum SP* of 2x10³ CFU/ml, *Lactobacillus plantarum AN* of 1x10² CFU/ml, *Lactobacillus paracasei TD* of 1x10² CFU/ml, *Lactobacillus catenaformis SE* of 4x10² CFU/ml, and *Kluyveromyces marxianus SB* of 7x10² CFU/ml, typical of cow's milk obtained in the mountainous regions of the eastern and central Slovakia, which are identified and separated from cow's milk and subsequently industrially reproduced, processed and added back to drinking milk, and these bacteria are subsequently industrially reproduced, processed and bound to a base in an instant powder form, which is most suitable for being consumed by the population of the region of Eastern and Central Slovakia.

4. A method for producing milk and dairy supplements with a unique fatty acid composition by restoring a commensal natural microbiota, **characterized by** the fact that it allows obtaining a unique fatty acid composition by identifying and separating it from cow's, sheep's or goat's milk of a specific geographical area, and such fatty acids are used in the milk that is most suitable for consumption by the population of the milk-producing region, and can be consumed as fresh milk, or these fatty acids can additionally be added to drinking milk, or these fatty acids can be processed and bound to the base in an instant powder form.

5. A method for producing milk and dairy supplements with a unique fatty acid composition by restoring a commensal natural microbiota, **characterized by** the fact that allows obtaining the following unique fatty acid composition with a specific ratio of ω-3 α-Linolenic acid (C18:3n3) of 0.81%, ω-6 Linoleic acid (C18:2n6c) of 2.15% (short chain fatty acids), Arachidic acid (20:0) of 0.22%, and Behenic acid (22:0) of 0.11% (very long chain fatty acids), which is typical of cow's milk obtained from the mountainous regions of the Eastern and Central Slovakia, and such fatty acids are used in milk, which is most suitable for being consumed by the population of the region of Eastern and Central Slovakia, where it can be consumed as fresh milk, or these fatty acids may additionally be added to drinking milk, or these fatty acids may be processed and bound to the base in an instant powder form.
